# EUROPÄISCHE PATENTANMELDUNG

(11) **EP 2 390 887 A1**
(43) Veröffentlichungstag der Anmeldung: **30.11.2011**
(21) Anmeldenummer: 10164245.2
(22) Anmeldetag: 28.05.2010
(51) Int. Cl.: H01H 1/38, H02B 13/035, H02B 13/045, H01H 33/02

(54) **Leistungsschalter**

(71) Anmelder: ABB Technology AG, 8050 Zürich (CH)
(72) Erfinder: Sabani, Arben, 8172 Niederglatt (CH); Würgler, Roland, 8305 Dietlikon (CH); Holaus, Walter, 8047 Zürich (CH); Sologuren-Sanchez, Diego, 5430 Wettingen (CH); Keller, Markus, 8052 Zürich (CH); Tilliette, Vincent, 8049 Zürich (CH)
(74) Vertreter: ABB Patent Attorneys

(57) **Zusammenfassung**

Leistungsschalter mit einer alternativen Anzahl oder gar keinen Erd- bzw. Stützisolatoren, sowie eine gasisolierte Schaltanlage mit einem Leistungsschalter mit einer alternativen Anzahl oder gar keinen Erd-bzw. Stützisolatoren.

## Beschreibung

### GEBIET DER ERFINDUNG

Die vorliegende Erfindung betrifft einen Leistungsschalter und insbesondere einen Leistungsschalter mit einer reduzierten Anzahl von Erd-bzw. Stützisolatoren, sowie eine gasisolierte Schaltanlage mit einem Leistungsschalter mit einer reduzierten Anzahl von Erd-bzw. Stützisolatoren.

### HINTERGRUND DER ERFINDUNG

In einem Leistungsschalter, insbesondere einem gasisolierten Leistungsschalter sind in der Regel zwei Schalterkontaktpole vorgesehen, die zueinander positioniert werden müssen, um einen ordnungsgemäßen Abstand zu einem beispielsweise geerdeten Gehäuse sowie einen definierten Abstand zueinander zu gewährleisten. Zu diesem Zweck ist es notwendig, entsprechende Abstützungen vorzusehen, die die Schalterkontaktpole gegenüber dem Gehäuse bzw. zueinander abstützen. Derartige Abstützungen müssen dabei entsprechend des Einsatzgebietes des Leistungsschalters isolationsfest sein, so dass nicht nur eine mechanische Abstützung, sondern auch eine Isolationsfestigkeit des Leistungsschalters gewährleistet ist. Darüber hinaus müssen die Leistungsschalterkontaktpole, insbesondere bei einem geerdeten Gehäuse, kontaktiert werden, was beispielsweise durch eine Zuleitung erfolgt, die durch eine Durchführung in das Leistungsschaltergehäuse führt, um einen Kontaktierung des jeweiligen Schalterkontaktpoles zu ermöglichen. In einem Leistungsschalter ist jedoch jedes Inventar, insbesondere Stütz- und Erdisolatoren, eine potentielle Gefahr für einen Durchschlag und somit für ein Versagen des Leistungsschalters.

### ZUSAMMENFASSUNG DER ERFINDUNG

Vor diesem Hintergrund kann es als eine Aufgabe der vorliegenden Erfindung betrachtet werden, einen Leistungsschalter bereitzustellen, der möglichst wenig Inventar in Form von Stütz- bzw. Erdisolatoren aufweist.

Die Aufgabe der vorliegenden Erfindung wird gelöst durch den Gegenstand der unabhängigen Ansprüche, wobei vorteilhafte Ausgestaltungen in den abhängigen Ansprüchen verkörpert werden.

Gemäß einer beispielhaften Ausführungsform der Erfindung wird ein Leistungsschalter bereitgestellt mit einem einen Schaltkammergasraum umschließenden Schaltkammergehäuse, einer ersten elektrischen Durchführung, einer ersten Schalterkontakteinheit, einer zweiten Schalterkontakteinheit, einer Schaltstrecke und einer Ausrichtungsanordnung, wobei die Schaltstrecke zwischen der ersten Schalterkontakteinheit und der zweiten Schalterkontakteinheit angeordnet ist, wobei die erste elektrische Durchführung lateral an dem Schaltkammergehäuse angeordnet ist, wobei die erste elektrische Durchführung eine elektrische Verbindung zu der ersten elektrischen Schalterkontakteinheit bereitstellt, wobei die Ausrichtungsanordnung ausgelegt ist, um eine Ausrichtung der ersten Schalterkontakteinheit und der zweiten Schalterkontakteinheit zueinander über eine Positionierung der ersten Schalterkontakteinheit und der zweiten Schalterkontakteinheit jeweils gegenüber dem Schaltkammergehäuse zu gewährleisten.

Auf diese Weise kann mittels der Ausrichtungsanordnung gewährleistet werden, dass die beiden Schalterkontakteinheiten eines Leistungsschalters zueinander ordnungsgemäß positioniert sind, derart, dass ein ordnungsgemäßes Öffnen bzw. Schließen von Kontakten der Schalterkontakteinheiten gewährleistet werden kann. Darüber hinaus wird durch die Ausrichtungsanordnung ermöglicht, dass die beiden Schalterkontakteinheiten auch gegenüber dem Schaltkammergehäuse ordnungsgemäß positioniert sind, um entsprechende Isolationsabstände einhalten zu können. Eine derartige Ausrichtungsanordnung kann dabei an der elektrischen Durchführung vorgesehen sein, die lateral an dem Schaltkammergehäuse angeordnet ist. Lateral bedeutet in diesem Zusammenhang umfangsseitig bezüglich der Längserstreckungsrichtung des Leistungsschalters. Ein Leistungsschalter kann dabei sowohl ein Hochspannungs- als auch Hochstromleistungsschalter sein.

Gemäß einer beispielhaften Ausführungsform der Erfindung weist der Leistungsschalter ferner eine zweite elektrische Durchführung auf, wobei die zweite elektrische Durchführung lateral an dem Schaltkammergehäuse angeordnet ist und die zweite elektrische Durchführung eine elektrische Verbindung zu der zweiten elektrischen Schalterkontakteinheit bereitstellt.

Auf diese Weise kann eine Kontaktierung von einer ersten bzw. zweiten Schalterkontakteinheit erreicht werden, insbesondere wenn das Gehäuse des Leistungsschalters geerdet ist.

Gemäß einer beispielhaften Ausführungsform der Erfindung weist die Ausrichtungsanordnung eine erste tragende Befestigung an der ersten elektrischen Durchführung auf, wobei die erste Schalterkontakteinheit innerhalb des Schaltkammergehäuses lateral an der ersten tragenden Befestigung angeordnet ist.

Auf diese Weise ist es möglich, die erste Schalterkontakteinheit nicht nur bezüglich der elektrischen Kontaktierung an der ersten elektrischen Durchführung anzubinden, sondern diese auch mechanisch tragend an der ersten elektrischen Durchführung anzukoppeln. Auf diese Weise können weitere Stützisolatoren bezüglich der ersten Schalterkontakteinheit vermieden werden, bzw. deren Anzahl reduziert werden, wodurch sich eine Verminderung des Inventars des Leistungsschalters ergibt. Insbesondere kann die erste Schalterkontakteinheit derart tragend an der ersten tragenden Befestigung angeordnet sein, dass keine weiteren tragenden und stützenden Elemente notwendig sind bezüglich der ersten Schalterkontakteinheit. Ungeachtet dessen können jedoch Elemente vorgesehen sein, um etwa bewegliche Teile der ersten Schalterkontakteinheit zu betätigen, wobei diese jedoch dann nicht zwingend zu einer tragenden Befestigung beitragen müssen.

Gemäß einer beispielhaften Ausführungsform der Erfindung weist die Ausrichtungsanordnung eine zweite tragende Befestigung an der zweiten elektrischen Durchführung auf, wobei die zweite Schalterkontakteinheit innerhalb des Schaltkammergehäuses lateral an der zweiten tragenden Befestigung angeordnet ist.

Auf diese Weise kann auch für die zweite Schalterkontakteinheit eine weitere Abstützung bzw. tragende Befestigung, insbesondere von Stützisolatoren, gegenüber dem Leistungsschaltergehäuse vermieden werden, oder deren Anzahl reduziert werden. Dabei kann analog zur obigen Ausführung die zweite Schalterkontakteinheit allein an der tragenden Befestigung an der zweiten Durchführung befestigt sein. Auch dies schließt jedoch nicht aus, dass mechanische Elemente vorgesehen sein können, die etwa bewegliche Teile in bzw. an der zweiten Schalterkontakteinheit betätigen können.

Gemäß einer beispielhaften Ausführungsform der Erfindung steht ein der Schaltstrecke abgewandter Bereich der ersten Schalterkontakteinheit und/oder der zweiten Schalterkontakteinheit in einem bezüglich der tragenden Befestigung von der Schaltstrecke abgewandten Bereich bis zum Schaltkammergehäuse vollständig mit dem Schaltkammergasraum des Schaltkammergehäuses in Kommunikation.

Auf diese Weise kann auf sämtliche Abstützungen und Befestigungen im rückwärtigen Bereich der jeweiligen Schalterkontakteinheit verzichtet werden, und eine tragende Befestigung gegenüber dem Schaltkammergehäuse ausschließlich über die Durchführungen bzw. die tragenden Befestigungen an den Durchführungen erreicht werden.

Gemäß einer beispielhaften Ausführungsform der Erfindung ist die erste Schalterkontakteinheit und/oder die zweite Schalterkontakteinheit an einer von der Schaltstrecke abgewandten Seite in Längserstreckungsrichtung des Schaltkammergehäuses gegenüber dem Schaltkammergehäuse mit einem Erdisolator abgestützt.

Als Alternative zu der Ausführungsform, bei der der rückwärtige Bereich der Schalterkontakteinheiten vollständig mit dem Schaltkammergasraum des Schalterkammergehäuses in Kommunikation steht, kann mit der vorgenannten Ausführungsform eine Stützung lediglich in der Längsachse erfolgen, so dass jedoch seitliche Abstützungen gegenüber dem Schalterkammergehäuse im Wesentlichen vermieden werden können. Da der kritische Bauraum sich eher seitlich als in die Länge erstreckt, ist es vorteilhaft, im seitlichen Bereich die Abstützungen zu vermeiden, die eventuell zu einer Verminderung der Isolationsfestigkeit seitlich gegenüber dem Schalterkammergehäuse führen können.

Gemäß einer beispielhaften Ausführungsform der Erfindung sind die erste Schalterkontakteinheit, die Schaltstrecke und die zweite Schalterkontakteinheit entlang einer Längserstreckungsrichtung des Schalterkammergehäuses angeordnet, wobei der Leistungsschalter für einen Betrieb in horizontaler Lage der Längserstreckungsrichtung ausgelegt ist, bei welcher die Längserstreckungsrichtung im Wesentlichen orthogonal zur Wirkung der Erdanziehungskraft verläuft.

Auf diese Weise kann ein liegender Leistungsschalter bereitgestellt werden, bei dem die beiden Schalterkontakteinheiten entlang der Längserstreckungsachse verlaufen, so dass der Schalter mit einem Schalterkammergehäuse versehen werden kann, das relativ schmale Abmessungen aufweist.

Gemäß einer beispielhaften Ausführungsform der Erfindung sind die erste Durchführung und die zweite Durchführung bezüglich einer Längserstreckungsachse des Schalterkammergehäuses seitlich nach oben angeordnet.

Auf diese Weise kann, insbesondere bei einem Freiluftaufbau, eine günstige Zuleitung, insbesondere über eine Freileitungszuführung erreicht werden. Seitlich wird hier als radial zur Längserstreckungsrichtung verstanden, kann jedoch insbesondere auch geneigt zur Längserstreckungsrichtung sein. Insbesondere bei einer Anordnung von mehreren Leistungsschaltern nebeneinander kann dabei auch eine Neigung um die Längserstreckungsrichtung erfolgen, insbesondere bei den seitlichen Leistungsschaltern eine Anordnung mit mehreren Leistungsschaltern.

Gemäß einer beispielhaften Ausführungsform der Erfindung trennt die erste Durchführung und/oder die zweite Durchführung den Schaltkammergasraum von einem ersten angrenzenden Gasraum bzw. einem zweiten angrenzenden Gasraum, wobei die erste Durchführung und/oder die zweite Durchführung einen den Schaltkammergasraum von dem ersten angrenzenden Gasraum bzw. dem zweiten angrenzenden Gasraum trennenden Schottisolator aufweist.

Auf diese Weise kann der eigentliche Gasraum des Leistungsschalters verhältnismäßig klein gewählt werden, während beispielsweise ein angrenzender Gasraum der Durchführung mit dem Gasraum der Schalterkammer nicht verbunden ist. Dies ist insbesondere dann von Bedeutung, wenn in dem Schaltkammergasraum und dem Gasraum der Durchführung unterschiedliche Gasdrücke herrschen. Insbesondere lässt sich auch ein separater Austausch des Gases nur im Schaltkammergasraum durchführen, wenn es etwa zu einem Schaltvorgang gekommen ist, der die Gasqualität beeinträchtigt.

Gemäß einer beispielhaften Ausführungsform der Erfindung weist die erste tragende Befestigung und/oder die zweite tragende Befestigung eine lösbare Bolzenverbindung für eine tragende Aufnahme der ersten Schalterkontakteinheit bzw. der zweiten Schalterkontakteinheit auf.

Auf diese Weise kann die erste Schalterkontakteinheit bzw. die zweite Schalterkontakteinheit ohne größeren Aufwand und Probleme von den Durchführungen abgekoppelt werden, um diese etwa entlang der Längserstreckungsachse zu demontieren bzw. zu montieren.

Gemäß einer beispielhaften Ausführungsform der Erfindung ist die erste Schalterkontakteinheit gegenüber der zweiten Schalterkontakteinheit in einer Längserstreckungsrichtung des Schalterkammergehäuses mit einer Schalterkammerisolationsanordnung abgestützt.

Auf diese Weise kann durch die Schalterkammerisolationsanordnung eine ordnungsgemäße Positionierung der ersten Schalterkontakteinheit und der zweiten Schalterkontakteinheit zueinander erfolgen. Eine tragende Befestigung kann beispielsweise dann lediglich über die beiden tragenden Befestigungen an den beiden elektrischen Durchführungen erfolgen. Durch die Schalterkammerisolationsanordnung kann dabei das Maß einer Biegebeanspruchung an den tragenden Befestigungen der Durchführungen im Wesentlichen vermieden bzw. verringert werden.

Gemäß einer beispielhaften Ausführungsform der Erfindung steht die Schaltstrecke ununterbrochen entlang ihres gesamten Umfangs bis zum Schalterkammergehäuse mit dem Schaltkammergasraum des Schalterkammergehäuses in Kommunikation.

Als Alternative zu einer Schalterkammerisolationsanordnung kann diese bei entsprechender Ausgestaltung der tragenden Befestigungen auch weggelassen werden, wenn die tragende Befestigung der ersten Schalterkontakteinheit bzw. der zweiten Schalterkontakteinheit positionsstabil erfolgt. Durch ein Vermeiden einer Schalterkammerisolationsanordnung kann beispielsweise eine Wärmeabfuhr im Bereich der Kontaktstellen des Leistungsschalters verbessert werden.

Gemäß einer beispielhaften Ausführungsform der Erfindung ist die erste Schalterkontakteinheit und/oder die zweite Schalterkontakteinheit lateral gegenüberliegend von der ersten Durchführung bzw. der zweiten Durchführung gegenüber dem Schalterkammergehäuse mit einem Stützisolator abgestützt.

Eine derartige zusätzliche Abstützung mit einem Stützisolator gegenüberliegend der ersten Durchführung bzw. der zweiten Durchführung kann insbesondere bei relativ großen Komponenten von Bedeutung sein, bei denen verhältnismäßig große Gewichtskräfte gegenüber dem Schalterkammergehäuse abgestützt werden müssen. Darüber hinaus kann die tragende Befestigung beispielsweise mit einem Freiheitsgrad versehen werden, so dass die entsprechende Schalterkontakteinheit über den Stützisolator trotzdem definiert gegenüber dem Schalterkammergehäuse festgelegt wird. Auch bei einem Vorsehen einer nicht tragenden Befestigung an der Durchführung, etwa einer flexiblen Zuleitung, kann durch einen Stützisolator eine ordnungsgemäße Positionierung der jeweiligen Schalterkontakteinheit gegenüber dem Schalterkammergehäuse erfolgen. Ein Erdisolator und/oder ein Stützisolator können beispielsweise ein Polymerharz, insbesondere aus einem Epoxyharz, einem Polyurethanharz oder einem Phenolharz aufweisen oder aus diesen Materialien gefertigt sein und ggf. mit einer Struktureinlage, insbesondere einem faserverstärktem Kunststoff verstärkt sein.

Gemäß einer beispielhaften Ausführungsform der Erfindung weisen die erste tragende Befestigung, die zweite tragende Befestigung, die Schalterkammerisolationsanordnung und/oder der Stützisolator zur thermischen Ausdehnung einen Freiheitsgrad in einer Längserstreckungsrichtung des Schalterkammergehäuses auf.

Gemäß einer beispielhaften Ausführungsform der Erfindung wird eine gasisolierte Schaltanlage bereitgestellt mit wenigstens drei erfindungsgemäßen Leistungsschaltern, wobei die Leistungsschalter jeweils einphasig gekapselte Leistungsschalter sind.

Gemäß einer beispielhaften Ausführungsform der Erfindung weist die Ausrichtungsanordnung eine Erdisolatoranordnung auf mit einer Strebenanordnung mit einer Mehrzahl von Streben, wobei jede Strebe einen ersten Fußbereich, einen zweiten Fußbereich und einen zwischen dem ersten Fußbereich und dem zweiten Fußbereich liegenden Mittelbereich aufweist, wobei die Streben um eine Längserstreckungsachse der Strebenanordnung entlang eines Umfangs angeordnet sind, wobei die Strebenanordnung einen ersten mechanischen Ankopplungsbereich auf der Seite der ersten Fußbereiche zur Ankopplung an einen ersten Pol eines Leistungsschalters und einen zweiten mechanischen Ankopplungsbereich auf der Seite der zweiten Fußbereiche zur Ankopplung an einen Gehäuseteil eines Leistungsschalters aufweist.

Aufgrund der Strebenanordnung ist der Erdisolator nicht mehr räumlich abgeschottet gegenüber dem restlichen Volumen des Schalters, sondern steht mit dem restlichen Volumen des Schalters in Verbindung. Der Erdisolator ist zudem leichter und einfacher zu fertigen. Die Strebenanordnung erlaubt dabei dennoch eine hinreichende Positionierung und Kraftaufnahme, so dass ein zuverlässiges Öffnen und Schließen der Kontakt der Schalterkontaktpole gewährleistet bleibt. Über die mechanischen Ankopplungsbereiche der Strebenanordnung kann dabei eine entsprechende mechanische Ankopplung an entsprechende Bereiche der Schalterkontaktpole bzw. des Gehäuses erreicht werden.

Gemäß einer beispielhaften Ausführungsform der Erfindung weisen die Streben im Mittelbereich einen langgestreckten Querschnitt auf.

Unter einem langgestreckten Querschnitt wird eine Langstreckung im Wesentlichen in Richtung eines Umfangs orthogonal, d. h. azimutal zu einer Längserstreckungsachse der Streben beziehungsweise der Strebenanordnung verstanden. Langgestreckt kann dabei unter anderem, jedoch nicht ausschließlich, oval, ellipsenförmig oder nierenförmig sein. Durch einen langgestreckten Querschnitt kann erreicht werden, dass die Streben ein ausreichendes Biegemoment aufweisen, dabei jedoch nur geringe Abmessungen in eine bezüglich der Längserstreckungsachse der Strebenanordnung radiale Richtung aufweisen.

Gemäß einer beispielhaften Ausführungsform der Erfindung ist in der Strebenanordnung der erste Fußbereich einer jeweiligen Strebe gegenüber dem zugehörigen zweiten Fußbereich in dieser Strebe entlang des Umfangs verschoben, so dass die Streben gegenüber der Längserstreckungsachse geneigt sind.

Insbesondere können dabei die Streben ähnlich einem Helixabschnitt geformt sein, um den hinreichenden Abstand zwischen Gehäuse und den Schalterpolen zu gewährleisten. Auf diese Weise verlängert sich die effektive Länge der Strebe bei gleich bleibendem Abstand der beiden Befestigungsebenen, die orthogonal bezüglich der Längserstreckungsrichtung der Erdisolatoranordnung verlaufen und in denen jeweils die ersten und die zweiten Fußbereiche liegen können. Auf diese Weise ergibt sich ein verlängerter Kriechweg entlang der Oberfläche der jeweiligen Strebe, so dass eine derartige Strebenanordnung eine höhere Oberflächenentladungsfestigkeit aufweist gegenüber einer Strebenanordnung mit Streben, die parallel zu einer Längserstreckungsrichtung verlaufen.

Gemäß einer beispielhaften Ausführungsform der Erfindung weist die Strebenanordnung dabei mindestens drei Streben auf.

Auf diese Weise kann eine stabile Positionierung der beiden Schalterkontaktpole zueinander realisiert werden, insbesondere wenn die mindestens drei Streben einen im Wesentlichen gleichen Abstand zueinander aufweisen. Insbesondere können Verbiegungen entlang der Längserstreckungsachse im Wesentlichen unterbunden werden. Wenn in diesem Fall die Streben gegenüber der Längserstreckungsachse geneigt sind, kann diese Neigung bei allen Streben in eine gleiche Richtung verlaufen, so dass ein symmetrischer helixförmiger Strebenverlauf erreicht werden kann.

Gemäß einer beispielhaften Ausführungsform der Erfindung weist die Strebenanordnung mindestens vier Streben auf, wobei die Streben abwechselnd gegensinnig gegenüber der Längserstreckungsrichtung geneigt sind, derart, dass sich eine Versteifung in Umfangsrichtung um die Längserstreckungsachse ergibt.

Auf diese Weise kann eine tordierende Verschiebung des Schalterkontaktpols zum Gehäuse vermieden werden, wobei diese Torsion im Wesentlichen durch die abwechselnd gegensinnig geneigten Streben erreicht wird. Der Grad der Neigung richtet sich dabei nach dem Maß der erforderlichen Verbindungssteifigkeit. Eine Verbiegung und damit geometrische Verformung der Streben insbesondere bei in Längserstreckungsrichtung auftretenden Kräften, etwa beim Öffnen oder Schließen, kann vermieden werden.

Gemäß einer beispielhaften Ausführungsform der Erfindung ist in den ersten Fußbereichen beziehungsweise den zweiten Fußbereichen jeweils eine Feldsteuerungselektrode eingebettet, wobei innerhalb der Feldsteuerungselektrode eine Kraftaufnahmevorrichtung angeordnet ist.

Eine derartige Kraftaufnahmevorrichtung kann beispielsweise ein Gewinde oder ein Bolzen sein, jedoch auch eine Bajonettverbindung oder eine Klemmverbindung. Die Feldsteuerungselektrode kann dabei eine nach außen hin feldoptimierte Geometrie bewirken, so dass die Feldüberhöhungen im Wesentlichen unterhalb eines kritischen Bereiches gehalten werden können. Insbesondere kann in den Fußbereichen ein betreffend der Außenkontur feldoptimiertes Metallteil vorgesehen sein, in dessen Inneren sich beispielsweise die Kraftaufnahmevorrichtung in Form eines Gewindes oder einer anderen Befestigung befindet, sodass die Kraftaufnahmevorrichtung und die Feldsteuerungselektrode einstückig ausgebildet sind. Die Elemente der Feldsteuerungselektrode können dabei sowohl aus Metall als auch aus einem anderen Potential tragendem Material bestehen, wie etwa einem Kunststoff, dem ein Potential tragendes Additiv, wie beispielsweise Kohlenstoff oder Graphit beigemischt ist.

Gemäß einer beispielhaften Ausführungsform der Erfindung sind die ersten Fußbereiche der Streben jeweils einstückig mit einem ersten Trägerring ausgebildet und die zweiten Fußbereiche jeweils einstückig mit einem zweiten Trägerring ausgebildet.

Auf diese Weise kann eine im Wesentlichen einstückige Schaltkammerisolationsanordnung bereitgestellt werden, die einfach an den entsprechenden Schalterkontaktpolen befestigt werden kann, ohne eine separate Ausrichtung der einzelnen Streben zueinander vornehmen zu müssen.

Gemäß einer beispielhaften Ausführungsform der Erfindung weist die Strebenanordnung ein Polymerharz auf und weist in wenigstens einem Abschnitt einer elektrischen Isolierstrecke ein metalloxidgefülltes Polymerharz auf.

Polymerharze gewährleisten eine zuverlässige dielektrische Festigkeit und gleichzeitige eine mechanische Stabilität. Eine entsprechende Metalloxidfüllung kann dabei eine Erhöhung der mechanischen Stabilität bewirken, ebenso wie eine verbesserte thermische Eigenschaft darstellen. Als Polymerharze können beispielsweise, jedoch nicht ausschließlich, ein Epoxidharz, ein Polyurethanharz oder ein Phenolharz verwendet werden. Also Metalloxid kann dabei beispielsweise Aluminiumoxid Al₂O₃ verwendet werden. Darüber hinaus können auch Titandioxid oder Magnesiumoxid verwendet werden. Eine geeignet Kombination kann beispielsweise aus einem Aluminiumoxid gefüllten Epoxidharz bestehen, wobei Aluminiumoxid eine gewisse Beständigkeit gegenüber SF6 und SF4 aufweist, die insbesondere in gasisolierten Leistungsschaltern auftreten. Die Strebenanordnung kann dabei eine homogene Struktur aufweisen, beispielsweise eine homogene Vergussmasse sein, oder auch aus einem homogenen Material spanend bearbeitet sein. Insbesondere kann dabei auf Längsstrukturen wie beispielsweise Fasereinlagen verzichtet werden, insbesondere wenn diese ein Entladungs- beziehungsweise Teilentladungsproblem erwarten lassen.

Gemäß einer beispielhaften Ausführungsform der Erfindung weist der Mittelbereich wenigstens einer Strebe eine bezüglich der jeweiligen Strebe radial außen liegende Schale und eine bezüglich der jeweiligen Strebe radial innen liegende Füllung auf.

Dabei kann die außen liegende Schale die jeweilige Strebe außen vollständig umfassen oder auch lediglich als eine Halbschale ausgestaltet sein. Eine Schale kann dabei insbesondere bei Verwendung entsprechender zugstabiler Materialien entsprechende Zugkräfte aufnehmen, während eine innen liegende Füllung Druckkräfte aufnehmen können. Ferner kann eine Schale auch einen mechanischen Schutz für die innen liegende Füllung darstellen. Auf diese Weise wird eine besonders Zug- und Druckkraft stabile, d.h. auch biegestabile Strebenanordnung für eine Erdisolatoranordnung bereitgestellt.

Gemäß einer beispielhaften Ausführungsform der Erfindung ist der Umfang kreisförmig und beziehungsweise oder die Erdisolatoranordnung in einem einphasig gekapselten Leistungsschalter einbaubar.

Ein kreisförmiger Umfang ermöglicht dabei einen vereinfachten Zusammenbau der Erdisolatoranordnung beziehungsweise des Leistungsschalters, da eine entsprechende radiale Ausrichtung nicht beachtet werden muss.

Gemäß einer beispielhaften Ausführungsform der Erfindung ist wenigstens ein Teil der Strebenanordnung beschichtet, insbesondere mit einer Diffusionsbarriere.

Eine derartige Diffusionsbarriere kann beispielsweise eine Titandioxidbeschichtung oder eine Epoxylackbeschichtung sein. Auf diese Weise kann insbesondere verhindert werden, dass aggressive Zersetzungsprodukte, die in einem gasisolierten Leistungsschalter auf Grund der Lichtbogeneinwirkung auftreten können, die Struktur der Strebenanordnung beziehungsweise der Schaltkammerisolationsanordnung angreifen oder gar zerstören.

Der Mittelteil der Strebe kann anstelle einer homogenen Materialstruktur jedoch auch eine tragende und stabilisierende Kerneinlage aufweisen, wie beispielsweise einer Kompositrohr, ein Kompositstreifen oder eine Stange, wobei die Füllung beziehungsweise die Strebe um das entsprechende Rohr, den Streifen beziehungsweise die Stange herum gegossen werden kann. Insbesondere kann der Mittelteil der Strebe auch eine Faserverstärkungseinlage aufweisen, insbesondere der Gestalt, dass keine Entladungs- beziehungsweise Teilentladungsvorgänge zu befürchten sind.

Gemäß einer beispielhaften Ausführungsform der Erfindung ist die Erdisolationsanordnung als ein Segmentrohr ausgeführt.

Auf diese Weise kann, insbesondere wenn das Segmentrohr nach unten offen ist, verhindert werden, dass sich herabfallende Partikel an oder auf dem Erdisolator ansammeln. Unter einem Segmentrohr ist ein Rohr zu verstehen, dass nur entlang eines Umfangssegmentes geschlossen ist und im restlichen Bereich offen ist. Ein derartiges Segmentrohr kann etwa als Halbrohr ausgeführt sein, dass der Länge nach eine Längsöffnung aufweist.

Es sollte bemerkt werden, dass sich die im Folgenden beschriebenen Ausführungsformen der Erfindung gleichermaßen auf den Leistungsschalter als auch die gasisolierte Schaltanlage beziehen.

Einzelne Merkmale können selbstverständlich auch untereinander kombiniert werden, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsformen erläutert und verdeutlicht.

### KURZE BESCHREIBUNG DER FIGUREN

Beispielhafte Ausführungsformen werden im Folgenden mit Bezugnahme auf die folgenden Zeichnungen beschrieben.
- Figur 1: zeigt eine beispielhafte Ausführungsform der Erfindung mit einer tragenden Befestigung an den Durchführungen.
- Figur 2: zeigt eine beispielhafte Ausführungsform der Erfindung mit einem Erdstützisolator in einem rückwärtigen Bereich einer Schalterkontakteinheit.
- Figur 3: zeigt eine beispielhafte Ausführungsform der Erfindung mit einer einseitig tragenden Befestigung an einer Durchführung und einem Erdstützisolator in Längserstreckungsrichtung andererseits.
- Figur 4: zeigt eine beispielhafte Ausführungsform der Erfindung mit einem jeweils lateralen Stützisolator.
- Figur 5: zeigt eine beispielhafte Ausführungsform der Erfindung mit einem Schalterkammerisolator und einer tragenden Befestigung an den Durchführungen.
- Figur 6: zeigt eine beispielhafte Ausführungsform der Erfindung mit einem Schalterkammerisolator und einem lateralen Stützisolator.
- Figur 7: zeigt eine beispielhafte Ausführungsform der Erfindung mit einem Erdisolator mit Strebenanordnung.
- Figur 8: zeigt eine beispielhafte Ausführungsform der Erfindung eines Erdisolators mit Halbrohrform.
- Figur. 9: zeigt eine beispielhafte Ausführungsform der Erfindung eines Erdisolators mit drei geraden Streben.
- Figur 10: zeigt eine beispielhafte Ausführungsform der Erfindung eines Erdisolators mit vier schrägen Streben.
- Figur 11: zeigt eine beispielhafte Ausführungsform der Erfindung eines Erdisolators mit einstückig geformten Fußbereichen und Streben.
- Figur 12: zeigt eine beispielhafte Ausführungsform der Erfindung eines Erdisolators mit vier Streben in einem Schalenaufbau.

### DETAILIERTE BESCHREIBUNG BEISPIELHAFTER AUSFÜHRUNGSFORMEN

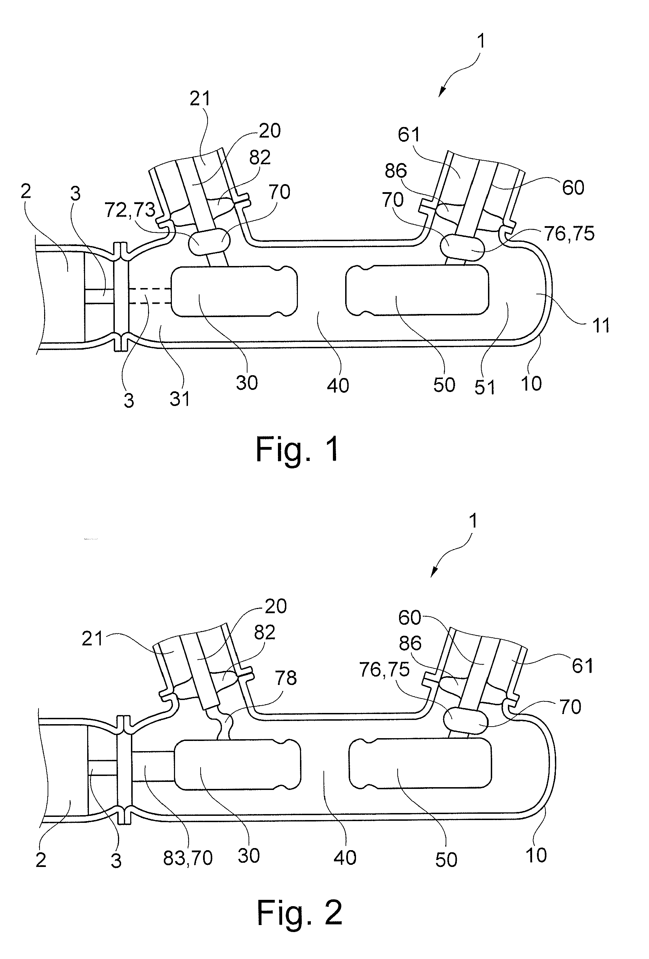

Figur 1 zeigt einen Leistungsschalter 1, hier in einer horizontalen Ausrichtung, mit einem Schalterkammergehäuse 10, das einen Schaltkammergasraum 11 umschließt. Innerhalb des Schaltkammergasraumes befindet sich in der hier gezeigten Ausführungsform eine erste Schalterkontakteinheit 30 sowie eine zweite Schalterkontakteinheit 50. Zwischen diesen beiden Schalterkontakteinheiten befindet sich die Schaltstrecke 40, die in der hier gezeigten Ausführungsform geöffnet ist. In der hier gezeigten Ausführungsform befindet sich in der ersten Schalterkontakteinheit 30 ein hier nicht sichtbarer beweglicher Teil, der über eine Schaltstange 3 über einen Antrieb 2 derart bewegbar ist, dass er mit einem entsprechenden Gegenkontakt der zweiten Schalterkontakteinheit 50 kontaktiert werden kann. Über Durchführungen 20, 60 sind die entsprechenden Schalterkontakteinheiten 30 bzw. 50 kontaktierbar. Die Durchführungen führen in der hier gezeigten Anordnung in angrenzende Schaltkammergasräume 21 bzw. 61, wobei über entsprechende Stützisolatoren 82, 86 eine Abschottung des Schaltkammergasraumes 11 gegenüber den angrenzenden Gasräumen 21, 61 erfolgen kann. Ferner ist eine Ausrichtungsanordnung 70 vorgesehen, mit der die erste Schalterkontakteinheit bzw. die zweite Schalterkontakteinheit gegenüber dem Schalterkammergehäuse 10 als auch die erste Schalterkontakteinheit 30 gegenüber der zweiten Schalterkontakteinheit 50 positioniert werden kann. Diese Ausrichtungsanordnung weist in der in Figur 1 gezeigten Anordnung eine erste und eine zweite tragenden Befestigung 72, 76 auf. Mit der ersten tragenden Befestigung ist die erste Schalterkontakteinheit 30 tragend an der Durchführung 20 befestigt. Mit der zweiten tragenden Befestigung 76 ist die zweite Schalterkontakteinheit 50 tragend an der zweiten Durchführung 60 befestigt. Die erste tragende Befestigung 72 kann dabei mit einer lösbaren Bolzenbefestigung 73 versehen sein, ebenso wie die zweite tragende Befestigung 76 mit einer lösbaren Bolzenbefestigung 75 versehen sein kann. Die lösbare Bolzenbefestigung ermöglicht die leichte Montage bzw. Demontage entlang der Längserstreckungsachse, etwa über endseitig abnehmbare Deckel. In der in Figur 1 gezeigten Ausführungsform ist ein rückwärtiger Bereich 31 der ersten Schalterkontakteinheit 30 sowie ein rückwärtiger Bereich 51 der zweiten Schalterkontakteinheit 50 frei von mechanischen Abstützungen, da eine mechanische Abstützung, hier sowohl der ersten Schalterkontakteinheit als auch der zweiten Schalterkontakteinheit, allein über die tragende Befestigung 72 bzw. 76 erfolgt.

Figur 2 zeigt eine weitere Ausführungsform der Erfindung, bei der die zweite Schalterkontakteinheit 50 über eine tragende Befestigung 76 an der Durchführung 60 befestigt ist. In der in Figur 2 gezeigten Ausführungsform kann auf weitere Stützelemente bzw. Stützisolatoren bezüglich der zweiten Schalterkontakteinheit 50 verzichtet werden. Die erste Schalterkontakteinheit 30 wird gegenüber dem Schalterkammergehäuse 10 beziehungsweise dessen Gehäusedeckel über einen Erdstützisolator 83 tragend befestigt, der zu der Ausrichtungsanordnung 70 gehört. Es sei verstanden, das die Ausrichtungsanordnung in sämtlichen Ausführungsformen nicht in einem einzelnen Element oder einer zusammenhängenden Anordnung zu verstehen ist, sondern in einer entsprechenden Zusammenstellung von Ausrichtungselementen, die jedoch auch örtlich beabstandet voneinander angeordnet sein können. Eine Kontaktierung der ersten Schalterkontakteinheit 30 erfolgt dann beispielsweise über einen flexiblen Kontakt 78, der selbst jedoch keine mechanische Festlegung der ersten Schalterkontakteinheit 30 bewirkt, bzw. eine gewisse Anzahl von Freiheitsgraden aufweist.

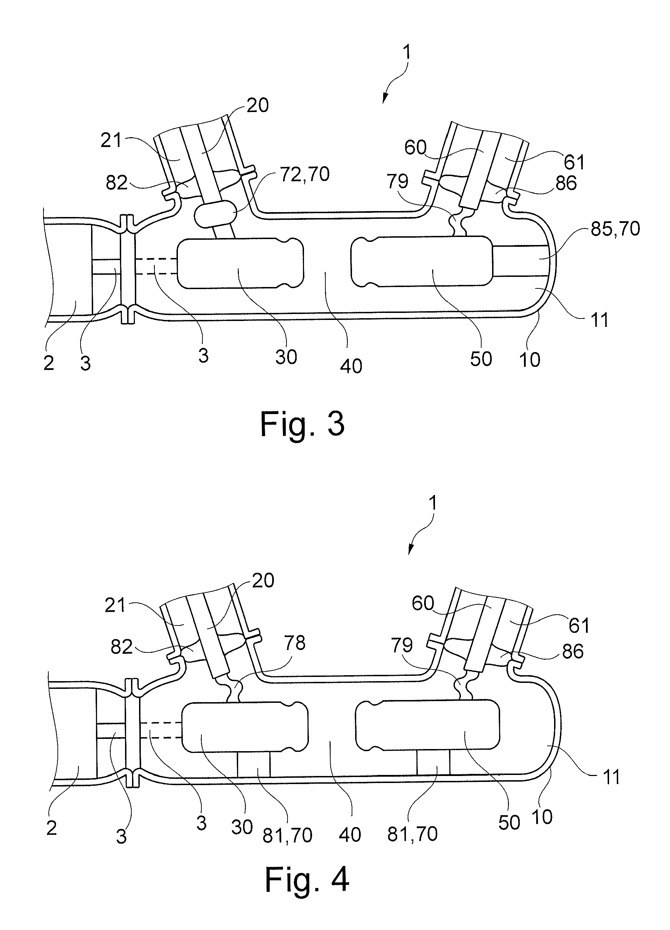

Figur 3 zeigt eine weitere Ausführungsform der Erfindung, bei der die erste Schalterkontakteinheit 30 analog Figur 1 an der ersten Durchführung 20 tragend befestigt ist, während die zweite Schalterkontakteinheit 50 analog der ersten Schalterkontakteinheit der Figur 2 tragend über einen rückwärtigen Erdstützisolator 85 am Schalterkammergehäuse 10 tragend befestigt ist. Eine elektrische Zuleitung über die Durchführung zu der zweiten Schalterkontakteinheit 50 erfolgt über eine flexible Zuleitung 79. In der in Figur 3 gezeigten Anordnung kann mit Ausnahme der tragenden Befestigung 72 an der ersten elektrischen Durchführung 20 der ersten Schalterkontakteinheit 30 und der tragenden Befestigung 85 der zweiten Schalterkontakteinheit 50 am Schalterkammergehäuse 10 beziehungsweise dessen weiterem Gehäusedeckel auf weitere Stützelemente oder tragende Elemente im Wesentlichen verzichtet werden.

Auf diese Weise kann die Anzahl der Isolationselemente, die ein potentielles Risiko eines Oberflächendurchschlags darstellen, im Wesentlichen verringert werden.

Figur 4 zeigt eine weitere Ausführungsform der Erfindung, bei der sowohl die erste Schalterkontakteinheit 30 als auch die zweite Schalterkontakteinheit 50 gegenüber dem Schaltergehäuse 10 über einen lateralen bzw. seitlichen Stützisolator 81 abgestützt und tragend befestigt sind. Eine elektrische Zuführung von der Durchführung 20 zu der ersten Schalterkontakteinheit 30 kann dabei über eine flexible Zuleitung 78 erfolgen, während eine elektrische Zuleitung zu der zweiten Schalterkontakteinheit 50 von der zweiten Durchführung 60 ebenfalls über eine flexible Zuleitung 79 erfolgen kann.

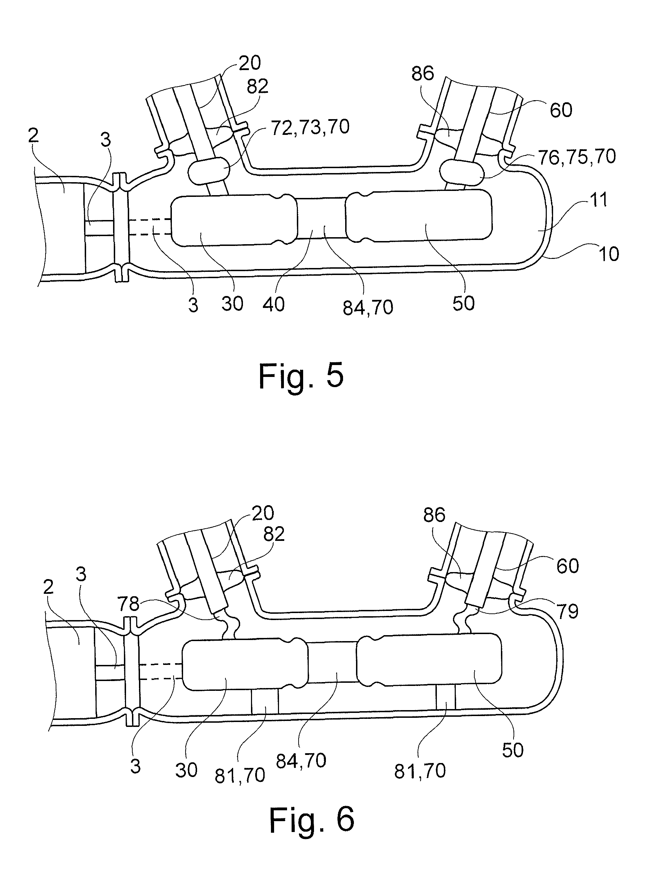

Figur 5 zeigt eine weitere beispielhafte Ausführungsform der Erfindung, bei der die beiden Schalterkontakteinheiten 30, 50 analog Figur 1 über eine tragende Befestigung 72, 76 an den elektrischen Durchführungen 20, 60 tragend befestigt sind. Dabei kann die erste Schalterkontakteinheit gegenüber der zweiten Schalterkontakteinheit über einen Schalterkammerisolator 84 gegeneinander abgestützt und positioniert werden, so das eine Verschiebung der beiden Schalterkontakteinheiten 30, 50 zueinander vermieden werden kann. Auf diese Weise kann eine zuverlässige Kontaktierung über die entsprechenden Kontakte der Schalterkontakteinheit gewährleistet werden. Es sei verstanden, dass in dieser, sowie auch sämtlichen anderen beschriebenen Ausführungsformen die Ausrichtungsanordnung aus unterschiedlichen Elementen bestehen kann, zu denen in unterschiedlicher Kombination die tragende Befestigung 72 bzw. 76, die Erdstützisolatoren 83, 85, die Stützisolatoren 81 bzw. der Schalterkammerisolator 84 gehören können.

Figur 6 zeigt eine weitere beispielhafte Ausführungsform der Erfindung, bei der die erste Schalterkontakteinheit 30 sowie die zweite Schalterkontakteinheit 50 jeweils über einen Erdstützisolator 81 lateral an dem Schalterkammergehäuse 10 befestigt und tragend gehaltert sein kann, analog Figur 4. Ferner ist in der in Figur 6 gezeigten Ausführungsform ein Schalterkammerisolator 84 vorgesehen, der die erste Schalterkontakteinheit 30 gegenüber der zweiten Schalterkontakteinheit 50 positioniert und abstützt, so dass eine ordnungsgemäße Positionierung der hier nicht gezeigten Kontakte der ersten Schalterkontakteinheit und der zweiten Schalterkontakteinheit beim Öffnen und Schließen der Kontakte gewährleistet sein kann. Eine elektrische Zuführung von den elektrischen Durchführungen 20, 60 zu den entsprechenden Schalterkontakteinheiten 30, 50 kann über entsprechend flexible Zuleitungen 78, 79 erfolgen.

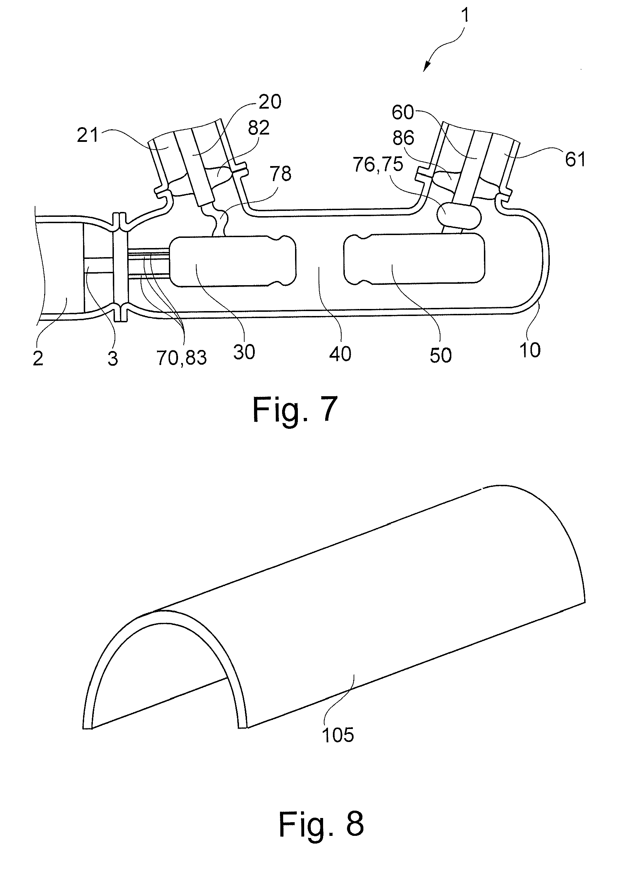

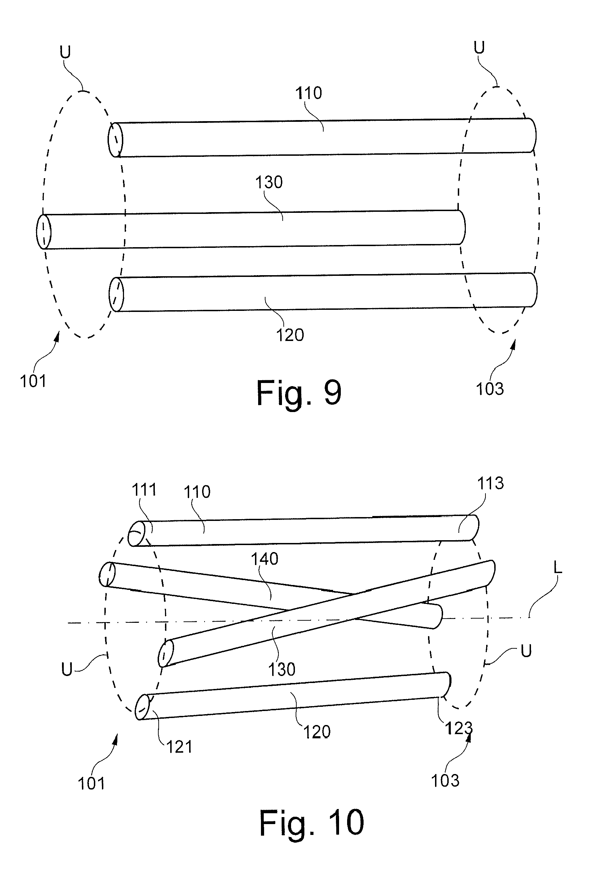

Figur 7 zeigt eine weitere Ausführungsform der Erfindung, bei die Erdisolatoranordnung 83 als eine alternative Strebenanordnung ausgeführt ist. Diese Strebenanordnung wird mit Bezug auf Figuren 9ff. näher erläutert. Es sei verstanden, dass die im Folgenden erläuterten Ausführungsformen einer Isolationsanordnung auch für die Erd- bzw. Stützisolatoren 81, 83 und 85 eingesetzt werden können.

Figur 9 zeigt eine Erdisolatoranordnung 83 mit drei Streben 110, 120, 130, die regelmäßig entlang eines Umfangs U angeordnet sind. Jede der Streben weist in der hier gezeigten Ausführungsform einen Mittelbereich 112, 122 auf sowie entsprechende erste Fußbereiche 111, 121 sowie zweite Fußbereiche 113, 123. Die in

Figur 9 gezeigte Erdisolatoranordnung 83 weist dabei einen ersten Ankopplungsbereich 101 sowie einen zweiten Ankopplungsbereich 103 auf. Die Streben sind im Wesentlichen parallel zu einer Längserstreckungsachse L angeordnet, wobei die einzelnen Streben beziehungsweise deren Fußpunkte entlang eines Umfangs U angeordnet sind. Der Abstand der Streben entlang des Umfangs ist in der hier gezeigten Ausführungsform gleichförmig, kann jedoch auch je nach Bedarf ungleichmäßig sein. Es sei verstanden, dass die Streben kreiszylinderförmig sein können, jedoch ebenso eine Zylinderform mit langgestrecktem Querschnitt oder aber einen kreiszylindrischen Fußbereich und einen langgestreckten Mittelbereich aufweisen können.

Figur 10 zeigt eine Strebenanordnung mit vier Streben 110, 120, 130, 140, wobei die entsprechenden Streben jedoch abwechselnd gegenseitig zueinander geneigt sind, so dass die Fußpunkte 111, 121 beziehungsweise 113, 123 nicht mehr gleichmäßig entlang des Umfangs verteilt sind. Auf diese Weise stellt sich jedoch eine verhältnismäßig torsionsstabile Strebenanordnung ein, da bei einer Torsionsbelastung die Streben abwechselnd auf Zug und Druck belastet werden.

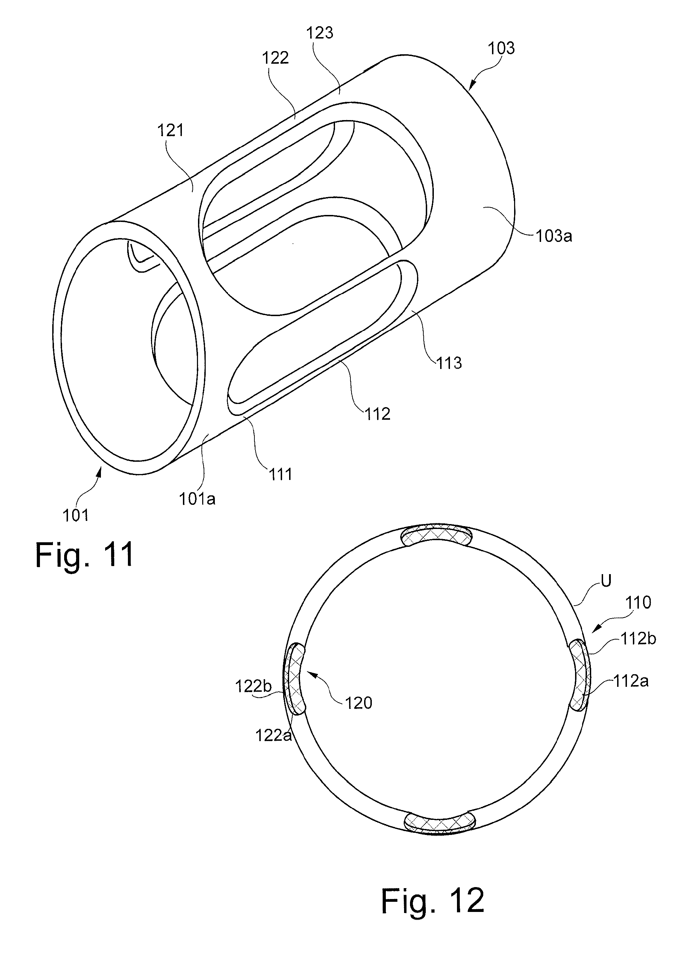

Figur 11 zeigt eine beispielhafte Ausführungsform einer Erdisolatoranordnung, bei der die Streben jeweils einstückig mit einem ersten Trägerring 101a beziehungsweise einem zweiten Trägerring 103a ausgestaltet sind. Der Ankopplungsbereich 101 kann dabei im Bereich des ersten Trägerringes 101a ausgestalten sein, während der zweite Ankoppelbereich 103 im Bereich des zweiten Trägerringes 103a ausgestaltet sein kann. Die Fußbereiche 111, 121 beziehungsweise 113, 123 der Streben können dabei in dem entsprechenden Trägerring 101a, 103a auslaufen und zusammen mit den entsprechenden Mittelbereichen 112, 122 einstückig ausgebildet sein. Es sei verstanden, dass der Querschnitt der Streben auch rund oder langgestreckt sein kann, ebenso wie die Streben schräg verlaufen können und nicht zwingend parallel zu der Längserstreckungsrichtung der Erdisolatoranordnung ausgestaltet sein müssen.

Figur 12 zeigt eine weitere Ausführungsform der Erfindung mit einer Schnittansicht durch die Erdisolatoranordnung. Dabei weisen die Streben 110, 120 entsprechende Mittelbereiche 112, 122 auf, die langgestreckt sind. Die Streben können in der hier gezeigten Ausführungsform aus einem Polymerharz gefertigt sein. Der Mittelbereich 112, 122 kann dabei beispielsweise mit einer Schale 112b, 122b versehen sein, die radial außen liegt. Radial außen bedeutet hier bezüglich der einzelnen Strebe, kann jedoch auch bezüglich der gesamten Erdisolatoranordnung verstanden werden. Im ersten Fall kann die Schale 112b, 122b beispielsweise auch entlang des gesamten Umfangs des Mittelbereichs der Strebe angeordnet sein, jedoch auch als Halbschale ausgestaltet sein, sowie in Figur 14 gezeigt ist. Der innere Bereich, d. h. radial innen liegend, bezüglich entweder der Strebe jedoch auch innerhalb der Erdisolatoranordnung kann dabei mit einem Füllmaterial 112a, 122a versehen sein. Auf diese Weise kann eine besonders Zug- und Druckkraft stabile Anordnung der Erdisolatoranordnung bereitgestellt werden.

Die Erdisolatoranordnung 83 kann jedoch ebenso als Rohr oder als Segmentrohr ausgeführt sein, so wie in Fig. 8 gezeigt. Das Segmentrohr 105 kann dabei ein sich in Längsrichtung erstreckendes Segment aufweisen, dass in der Fig. 8 in der Form eines Halbrohres ausgestaltet ist. Das Halbrohr kann dabei nach unten geöffnet sein, sodass eventuell vorhandene Partikel nach unten auf den Gehäuseboden fallen können, in dem (hier nicht gezeigte) Partikelfallen vorgesehen sein können und die dielektrische Wirkung/Feldwirkung nicht beeinträchtigen.

Es sei angemerkt, dass der Begriff "umfassen" weitere Elemente oder Verfahrensschritte nicht ausschließt, ebenso wie die Begriffe "ein" und "eine" mehrere Elemente und Schritte nicht ausschließen.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Leistungsschalter mit
einem einen Schaltkammergasraum (11) umschließenden Schaltkammergehäuse (10),
einer ersten elektrischen Durchführung (20),
einer ersten Schalterkontakteinheit (30),
einer zweiten Schalterkontakteinheit (50),
einer Schaltstrecke (40), und
einer Ausrichtungsanordnung (70),
wobei die Schaltstrecke zwischen der ersten Schalterkontakteinheit und der zweiten Schalterkontakteinheit angeordnet ist,
wobei die erste elektrische Durchführung lateral an dem Schaltkammergehäuse angeordnet ist,
wobei die erste elektrische Durchführung eine elektrische Verbindung zu der ersten elektrischen Schalterkontakteinheit bereitstellt,
wobei die Ausrichtungsanordnung (70) ausgelegt ist, um eine Ausrichtung der ersten Schalterkontakteinheit und der zweiten Schalterkontakteinheit zueinander über eine Positionierung der ersten Schalterkontakteinheit und der zweiten Schalterkontakteinheit jeweils gegenüber dem Schaltkammergehäuse zu gewährleisten.

2. Leistungsschalter gemäß Anspruch 1, ferner mit einer zweiten elektrischen Durchführung (60), wobei die zweite elektrische Durchführung lateral an dem Schaltkammergehäuse (10) angeordnet ist und die zweite elektrische Durchführung eine elektrische Verbindung zu der zweiten elektrischen Schalterkontakteinheit (50) bereitstellt.

3. Leistungsschalter gemäß einem der Ansprüche 1 und 2, wobei die Ausrichtungsanordnung (70) eine erste tragende Befestigung (72) an der ersten elektrischen Durchführung (20) aufweist, wobei die erste Schalterkontakteinheit (30) innerhalb des Schaltkammergehäuses (10) lateral an der ersten tragenden Befestigung angeordnet ist.

4. Leistungsschalter gemäß einem der Ansprüche 2 und 3, wobei die Ausrichtungsanordnung (70) eine zweite tragende Befestigung (76) an der zweiten elektrischen Durchführung (60) aufweist, wobei zweite Schalterkontakteinheit (50) innerhalb des Schaltkammergehäuses (10) lateral an der zweiten tragenden Befestigung angeordnet ist.

5. Leistungsschalter gemäß einem der Ansprüche 3 und 4, wobei ein der Schaltstrecke abgewandter Bereich (31, 51) der ersten Schalterkontakteinheit (30) und/oder der zweiten Schalterkontakteinheit (50) in einem bezüglich der tragenden Befestigung (72, 76) von der Schaltstrecke (40) abgewandten Bereich bis zum Schaltkammergehäuse (10) vollständig mit dem Schaltkammergasraum (11) des Schaltkammergehäuses in Kommunikation steht.

6. Leistungsschalter gemäß einem der Ansprüche 1 bis 4, wobei die erste Schalterkontakteinheit (30) und/oder die zweite Schalterkontakteinheit (50) an einer von der Schaltstrecke (40) abgewandten Seite (31, 51) in Längserstreckungsrichtung des Schaltkammergehäuses gegenüber dem Schaltkammergehäuse (10) mit einem Erdisolator abgestützt (83, 85) ist.

7. Leistungsschalter gemäß Anspruch 6, wobei der Erdisolator (83, 85) eine Strebenanordnung mit einer Mehrzahl von Streben (110, 120, 130), aufweist, wobei jede Strebe einen ersten Fußbereich (111, 121, 131), einen zweiten Fußbereich (113, 123, 133) und einen zwischen dem ersten Fußbereich und dem zweiten Fußbereich liegenden Mittelbereich (112, 122, 132) aufweist, wobei die Streben um eine Längserstreckungsachse (L) der Strebenanordnung entlang eines Umfangs (U) angeordnet sind, wobei die Strebenanordnung einen ersten mechanischen Ankopplungsbereich (101) auf der Seite der ersten Fußbereiche zur Ankopplung an einen ersten Pol eines Leistungsschalters und einen zweiten mechanischen Ankopplungsbereich (103) auf der Seite der zweiten Fußbereiche zur Ankopplung an einen Gehäuseteil eines Leistungsschalters aufweist.

8. Leistungsschalter gemäß Anspruch 6, wobei der Erdisolator als ein Segmentrohr (105) ausgeführt ist.

9. Leistungsschalter gemäß einem der Ansprüche 1 bis 8, wobei die erste Schalterkontakteinheit (30), die Schaltstrecke (40) und die zweite Schalterkontakteinheit (50) entlang einer Längserstreckungsrichtung des Schaltkammergehäuses (10) angeordnet sind, wobei der Leistungsschalter (1) für einen Betrieb in horizontaler Lage der Längserstreckungsrichtung ausgelegt ist, bei welcher die Längserstreckungsrichtung (L) im Wesentlichen orthogonal zur Wirkrichtung der Erdanziehungskraft verläuft.

10. Leistungsschalter gemäß Anspruch 9, wobei die erste Durchführung (20) und die zweite Durchführung (60) bezüglich einer Längserstreckungsachse des Schaltkammergehäuses (10) seitlich nach oben angeordnet sind.

11. Leistungsschalter gemäß einem der Ansprüche 1 bis 10, wobei die erste Durchführung (20) und/oder die zweite Durchführung (60) den Schaltkammergasraum (10) von einem ersten angrenzenden Gasraum (21) bzw. einem zweiten angrenzenden Gasraum (61) trennt,
wobei die erste Durchführung (20) und/oder die zweite Durchführung (60) einen den Schaltkammergasraum (10) von dem ersten angrenzenden Gasraum (21) bzw. dem zweiten angrenzenden Gasraum (61) trennenden Schottisolator (82, 86) aufweist.

12. Leistungsschalter gemäß einem der Ansprüche 3 bis 11, wobei die erste tragende Befestigung (72) und/oder die zweite tragende Befestigung (76) eine lösbare Bolzenbefestigung (73, 75) für eine tragende Aufnahme der ersten Schalterkontakteinheit (30) bzw. der zweiten Schalterkontakteinheit (50) aufweist.

13. Leistungsschalter gemäß einem der Ansprüche 1 bis 12, wobei die erste Schalterkontakteinheit (30) gegenüber der zweiten Schalterkontakteinheit (50) in einer Längserstreckungsrichtung des Schaltkammergehäuses mit einer Schaltkammerisolationsanordnung (84) abgestützt ist.

14. Leistungsschalter gemäß einem der Ansprüche 1 bis 12, wobei die Schaltstrecke (40) ununterbrochen entlang ihres gesamten Umfangs bis zum Schaltkammergehäuse (10) mit dem Schaltkammergasraum (11) des Schaltkammergehäuses in Kommunikation steht.

15. Leistungsschalter gemäß einem der Ansprüche 3 bis 12, wobei die erste tragende Befestigung (72), die zweite tragende Befestigung (76), die Schaltkammerisolationsanordnung (84) und/oder der Erdisolator (83, 85) zur thermischen Ausdehnung einen Freiheitsgrad in eine Längserstreckungsrichtung des Schaltkammergehäuses aufweisen.

16. Gasisolierte Schaltanlage mit wenigstens drei Leistungsschaltern gemäß einem der Ansprüche 1 bis 15, wobei die Leistungsschalter jeweils einphasig gekapselte Leistungsschalter sind.
